# EUROPÄISCHE PATENTANMELDUNG

(11) **EP 4 011 696 A1**
(43) Veröffentlichungstag der Anmeldung: **15.06.2022**
(21) Anmeldenummer: 21210239.6
(22) Anmeldetag: 24.11.2021
(51) Int. Cl.: B60N 2/815, B60N 2/818, B60N 2/897

(54) **TRAGSTANGE, HALTEVORRICHTUNG UND VERFAHREN ZUR HERSTELLUNG**

(30) Priorität: 27.11.2020 DE 102020131548
(71) Anmelder: GRAMMER AG, 92289 Ursensollen (DE)
(72) Erfinder: Hoffmann, Markus, 92245 Kümmersbruck (DE)
(74) Vertreter: Roche, von Westernhagen & Ehresmann

(57) **Zusammenfassung**

Die Erfindung betrifft Tragstange (15) für eine Kopfstütze eines Fahrzeugsitzes, welche als Rohr ausgebildet ist, mit wenigstens einer Struktur, die Teil einer Verriegelungsvorrichtung (17) ist und zum Zusammenwirken mit einem einer Haltestruktur (13) zugeordneten Riegel (23) der Verriegelungsvorrichtung (17) bestimmt ist, wobei die Struktur (19, 20) eine Grundfläche (33) aufweist, welche eine Bewegung des Riegels (23) radial zu einer Mittelachse (m) der Tragstange (15) verhindert und eine Riegelfläche umfasst, mit welcher im Zusammenwirken mit dem Riegel (23) eine Bewegung der Tragstange (15) in wenigstens eine erste Richtung (z1) verhinderbar ist. Erfindungsgemäß ist wenigstens eine Riegelstruktur als Fangstruktur (20) mit einer freigeschnittenen Zunge (30) versehen, wobei eine radial zu einer Mittelachse (m1) der Tragstange (15) gewandte Innenfläche (32) der Zunge (30) an einem freien Ende (40) mit einer Höhe (H) von der Grundfläche (33) beabstandet ist, so dass der Riegel (23) zumindest mit einem Teilbereich radial unter einen Bereich der Innenfläche (32) der Zunge (30) bewegbar ist.

## Beschreibung

Die Erfindung betrifft zunächst eine Tragstange für eine Kopfstütze eines Fahrzeugsitzes. Eine solche Tragstange ist im Sinne der Erfindung eine Einzeltragstange oder ein freies Ende eines Tragstangenbügels.

Aus offenkundiger Vorbenutzung sind Tragstangen bekannt, welche einen ersten Endbereich zur Befestigung an einem Kopfanlageteil und einen zweiten, dem ersten Endbereich gegenüberliegenden Endbereich, zur Befestigung an einem Fahrzeugsitz, aufweisen. Die Tragstange ist derart ausgebildet, dass sie in einer fahrzeugsitzfesten Haltestruktur einer Haltevorrichtung gehalten werden kann. Sie weist wenigstens eine Fangstruktur auf, die ein ungewolltes Herausbewegen der Tragstange aus der Haltevorrichtung verhindert. Diese Fangstruktur wies üblicherweise wenigstens eine Riegelfläche auf, die mit einem Riegel der Haltevorrichtung zusammenwirkte. Die Riegelfläche war derart ausgebildet, dass sie bei einem Zusammenwirken des Riegels und der Riegelfläche eine Bewegung der Tragstange in Demontagerichtung aus der Haltevorrichtung verhinderte.

Die DE 10 2010 045 614 A1 beschäftigte sich mit dem Problem, auch bei einer Verdrehung der Tragstange relativ zu der Führungsstruktur den Eingriff eines Riegels der Führungsstruktur mit einer Kerbe der Tragstange zu gewährleisten.

Es war Aufgabe der Erfindung bei einer Verdrehung der Tragstange, z.B. im Falle eines Fahrzeugaufpralls, die ungewollte Bewegung der Tragstange aus der Führungsstruktur auch hinsichtlich einer oben erwähnten Fangstruktur zu verhindern.

Die Aufgabe wurde gelöst durch eine Tragstange mit den Merkmalen des Anspruchs 1.

Der Begriff Fahrzeug bezeichnet im Sinne dieser Erfindung ein Land-, Luft- oder Wasserfahrzeug. Die Tragstange ist als Rohr ausgebildet. Sie weist eine Fangstruktur auf, die Teil einer Verriegelungsvorrichtung ist. Die Fangstruktur ist für das Zusammenwirken mit einem Riegel der Verriegelungsvorrichtung vorgesehen, welcher einer Haltevorrichtung der Tragstange zugeordnet ist, derart, dass eine Bewegung der Tragstange in wenigstens eine Richtung verhindert wird, wenn der Riegel mit der Aussparung in Eingriff ist.

Die sogenannte Fangstruktur, verhindert die Demontage der Tragstange aus einer Haltestruktur einer Haltervorrichtung, in welcher die Tragstange gehalten ist. Die Fangstruktur weist eine Grundfläche auf, welche eine Bewegung des Riegels radial zu einer Mittelachse der Tragstange begrenzt. Die Fangstruktur ist mit einer freigeschnittenen Zunge versehen. Der Begriff "freigeschnitten" bedeutet im Sinne der Erfindung, dass ein Bereich des Tragstangenmaterials keinen Kontakt mehr zu dem benachbarten Bereich aufweist, derart, dass ein etwa U-förmiger Spalt vorliegt, welcher einen freien Endbereich bildet, der in dieser Anmeldung als Zunge bezeichnet ist. Mit einem Verbindungsbereich ist der freie Endbereich weiterhin mit der Tragstange verbunden. Aufgrund der freigeschnittenen Zunge ist z. B. das Prägen einer weiteren Grundfläche möglich, wodurch eine höhere Sicherheit gegen ein Lösen des Riegels erreicht werden kann, wenn die Tragstange verdreht wird.

Bei der Herstellung der Grundfläche, indem die Außenfläche der Tragstange mittels eines Pressstempels etwa rechtwinklig zu einer Mittelachse der Tragstange eingedrückt wird, kann der Spalt z. B. durch Prägen erzeugt werden, indem das Material mit einem Prägwerkzeug abgeschert wird. Alternativ kann eine sich aufgrund des fließenden metallischen Materials der Tragstange bildende Wand zwischen der Grundfläche und der Außenfläche, z.B. spanend, abgetragen werden. Es entsteht dadurch die Zunge und innerhalb der Zunge zu einer Mittelachse der Tragstange gerichtet eine Öffnung.

Eine zu der Mittelachse gewandte Innenfläche der Zunge ist an einem freien Ende der Zunge mit einer definierten Höhe von einer Laibung der aufgrund des Freischnitts erzeugten Öffnung beabstandet, so dass der Riegel zumindest mit einem Teilbereich radial innerhalb der Innenfläche der Zunge angeordnet werden kann. Mit anderen Worten, der Riegel ist zwischen der Innenfläche und der Grundfläche angeordnet.

Eine Randfläche der Zunge erstreckt sich z.B. zwischen der Grundfläche und einem freien Endbereich der Zunge. Diese Randfläche bildet die Riegelfläche, welche die etwa radiale Bewegung eines Riegels aus der Haltestruktur heraus verhindern kann sowie eine Bewegung der Tragstange in eine erste Längsrichtung parallel zu der Mittelachse der Tragstange verhindern kann, wenn die Riegelfläche in Eingriff mit einem Riegel ist. Die Randfläche verläuft z. B. bei einer Draufsicht auf die Zunge etwa rechtwinklig zu einer Mittelachse der Tragstange etwa U-förmig oder V-förmig.

Die Zunge bildet z.B. zwei aufeinander zulaufende Randflächen aus, die sich an dem freien Endbereich treffen. Jede Randfläche bildet z.B. mit einer Mittelachse des freien Endbereichs einen Winkel zwischen 30° und 65°, z.B. zwischen 30° und 60°, insbesondere einen Winkel zwischen 40° und 50°. Z.B. erstreckt sich jede Randfläche in einem Winkel von 45 Grad zu der Mittelachse. Bei einem Winkel zwischen 60° und 65° ergeben sich günstige Fertigungseigenschaften und dennoch eine hohe Reibkraft, die eine Bewegung des Riegels aus dem Eingriff mit der Fangstruktur. Die Reibung des Riegels an den Randflächen der Zunge verhindert, dass sich der Riegel unbeabsichtigt aus dem Eingriff mit der Fangstruktur bewegt.

Aufgrund des Freischnitts bzw. der Freiprägung des Materials der Aussparung hat der Riegel die Möglichkeit, sich weiter in Richtung des Verbindungsbereichs der Zunge zu bewegen, so dass ein Eingriff mit der Zunge besteht, der eine ungewollte Entriegelung in Bezug auf den Stand der Technik mit größerer Sicherheit verhindert.

Die beiden Randflächen können z.B. eine Spitze bilden. Alternativ treffen sich die Randflächen an einer Übergangsfläche, die rechtwinklig zu der Mittelachse der Tragstange angeordnet ist. In dem Fall, dass die Randflächen aufeinander zulaufen, weist die Grundfläche an einer Laibung der Öffnung im Bereich der Zunge z. B. eine konkav komplementäre Form zu der Zunge auf.

Der Zunge liegt z.B. einer Riegelfläche gegenüber, die derart ausgebildet ist, dass sie im Zusammenwirken mit dem Riegel eine Bewegung der Tragstange in eine zweite Richtung verhindern kann.

In Richtung der Längsachse der Tragstange liegt der Fangstruktur z.B. eine Hangstruktur gegenüber, die von einer Außenfläche der Tragstange über einen Längsbereich der Mittelachse hinweg auf die Grundfläche abfällt. Dieser sachte Abfall verhindert eine Rissbildung bei der Herstellung der Tragstange und ermöglicht damit die Herstellung einer bezüglich der Außenfläche tiefen Grundfläche. Die Hangstruktur kann in einem der Außenfläche der Tragstange zugewandten Bereich eine Riegelfläche aufweisen.

Die Grundfläche erstreckt sich z.B. in Richtung parallel zu der Mittelachse der Tragstange auf beiden Seiten der Hangstruktur über einen Längsbereich der Tragstange hinweg. Mit diesem Merkmal wird die Breite der Riegelfläche begrenzt, was bei im Querschnitt kreiszylindrischen Tragstangen bei einer Verdrehung der Tragstange eine ungewollte Entriegelung verhindert. Es wird Bezug genommen auf die Offenbarung der DE 10 2008 047 531 A1 sowie die DE 10 2010 045 614 A1, deren Offenbarung vollständig in diese Anmeldung einbezogen wird.

Zusätzlich kann die Tragstange auch wenigstens zwei Riegelstrukturen umfassen, die eine Höhenverstellung und Verriegelung der Tragstange bezüglich einer zweiten Richtung parallel zu der Mittelachse der Tragstange entgegengesetzt der ersten Richtung ermöglichen. Die Riegelstrukturen verhindern z.B. in der Riegelposition im Zusammenwirken mit einem Riegel eine Bewegung der Tragstange relativ zu der Haltestruktur bezüglich zwei entgegengesetzter Bewegungsrichtungen, d. h. in die zweite Richtung und in die erste Richtung. Alternativ ist die Bewegung in eine Richtung, z.B. nach oben bzw. in die erste Richtung, möglich, während eine Bewegung in die andere Richtung verhindert wird.

Die Tragstange ist z.B. als Einzeltragstange oder als freier Endbereich eines Tragstangenbügels ausgebildet.

Die Erfindung betrifft gemäß einem zweiten Aspekt eine Haltevorrichtung für ein Kopfanlageteil umfassend eine Haltestruktur, welche eine Führung für eine Tragstange oder ein freies Ende eines Tragstangenbügels bildet und mit einem Riegel einer Verriegelungsvorrichtung, welcher an der Haltestruktur derart bewegbar gehalten ist, dass er in Eingriff und außer Eingriff mit einer Riegelstruktur der Tragstange bewegbar ist, zusammenwirkt. Befindet sich der Riegel in Eingriff mit der Riegelstruktur, ist die Verriegelungsvorrichtung in einer Riegelposition angeordnet. Befindet sich der Riegel außer Eingriff mit der Riegelstruktur, befindet sich die Verriegelungsvorrichtung in einer Löseposition.

Es war Aufgabe der Erfindung, eine Haltevorrichtung zu schaffen, welche z.B. im Falle eines Fahrzeugaufpralls, die ungewollte Bewegung der Tragstange aus der Haltestruktur verhindert.

Die Aufgabe wurde gelöst, durch eine Haltevorrichtung mit den Merkmalen des Anspruchs 10. Die Tragstange ist demnach nach einem der Ansprüche 1-7, d. h. entsprechend dem ersten Aspekt der Erfindung ausgebildet.

Der Riegel ist z.B. im Querschnitt im Wesentlichen kreisförmig ausgebildet.

Der Riegel ist z. B. von einem Metall oder aus Kunststoff gebildet.

Außerdem betrifft die Erfindung ein Verfahren zur Herstellung einer Tragstange gemäß einem der Ansprüche 1 bis 7.

Es war Aufgabe der Erfindung ein Verfahren zur Herstellung einer Tragstange gemäß einem der Ansprüche 1 bis 7 zu schaffen.

Die Aufgabe wurde gelöst, durch ein Verfahren mit den Merkmalen des Anspruchs 12. Demnach wird beim Eindrücken der Grundfläche ein Bereich der Tragstange freigeprägt, oder derart mit einem Fräser abgetragen wird, dass eine Zunge mit einem freien Endbereich gebildet ist. Zwischen der Zunge und einer Grundfläche ist ein etwa U-förmiger Spalt gebildet.

Eine Ausgestaltung des Verfahrens besteht darin, dass vor dem Eindrücken der Aussparung eine Matrize in einen Innenraum der Tragstange eingeführt wird, welche ein Gegenlager für das Eindrückwerkzeug bildet.

Ein Ausführungsbeispiel der Erfindung ist in der nachfolgenden Figurenbeschreibung, auch unter Bezugnahme auf die schematischen Zeichnungen, beispielhaft beschrieben. Dabei werden der Übersichtlichkeit halber - auch soweit unterschiedliche Ausführungsbespiele betroffen sind - gleiche oder vergleichbare Teile oder Elemente oder Bereiche mit gleichen Bezugszeichen, teilweise unter Hinzufügung kleiner Buchstaben, bezeichnet.

Merkmale, die nur in Bezug auf ein Ausführungsbeispiel beschrieben, dargestellt oder offenbart sind, können im Rahmen der Erfindung auch bei jedem anderen Ausführungsbeispiel der Erfindung vorgesehen werden. Derartig geänderte Ausführungsbeispiele sind - auch wenn sie in den Zeichnungen nicht dargestellt sind - von der Erfindung mit umfasst.

Alle offenbarten Merkmale sind für sich erfindungswesentlich. In die Offenbarung der Anmeldung wird hiermit auch der Offenbarungsinhalt der zitierten Druckschriften und der beschriebenen Vorrichtungen des Standes der Technik inhaltlich vollumfänglich mit einbezogen, auch zu dem Zweck, einzelne oder mehrere Merkmale der dort offenbarten Gegenstände in einen oder in mehrere Ansprüche der vorliegenden Anmeldung mit aufzunehmen. Auch solche geänderten Ausführungsbeispiele sind - auch wenn sie in den Zeichnungen nicht dargestellt sind - von der Erfindung mit umfasst.

Es zeigen:
Fig. 1 eine perspektivische Ansicht einer hinteren Sitzbank eines Fahrzeugs,
Fig. 2 eine perspektivische Ansicht einer Kopfstütze mit der erfindungsgemäßen Tragstange,
Fig. 3 eine perspektivische Darstellung einer Führungsstruktur zur Aufnahme einer Tragstange,
Fig. 4 eine perspektivische Darstellung der Haltestruktur, in welcher die erfindungsgemäße Tragstange gelagert ist, wobei sich die Verriegelungsvorrichtung in der Riegelposition befindet,
Fig. 5 eine Detaildarstellung gemäß Ausschnitt A in Fig. 4,
Fig. 6 eine perspektivische Ansicht eines Bereichs der erfindungsgemäßen Tragstange, welcher eine Fang-Aussparung aufweist,
Fig. 7 eine Draufsicht auf die Fang-Aussparung,
Fig. 8 eine Schnittansicht gemäß Schnittlinie B - B in Fig. 7,
Fig. 9 eine Schnittansicht gemäß Schnittlinie C - C in Fig. 7,
Fig. 10 eine Darstellung in Anlehnung an Fig. 9, wobei die Tragstange um 20° bezüglich der Mittelachse verdreht ist.

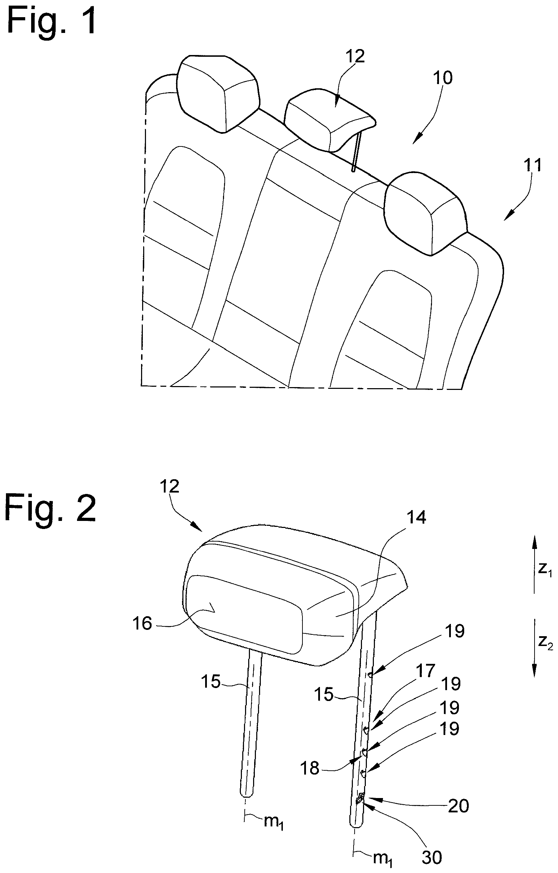

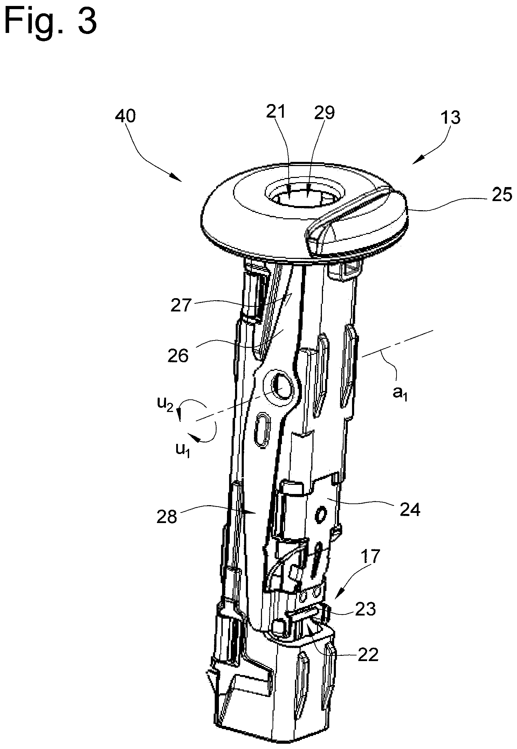

In Fig. 1 ist die hintere Sitzbank 11 eines Fahrzeugs dargestellt. Die erfindungsgemäße Kopfstützenvorrichtung ist in Fig. 1 mit dem Bezugszeichen 10 bezeichnet. Die Kopfstützenvorrichtung 10 umfasst die in Fig. 2 dargestellte Kopfstütze 12 sowie zwei Führungshülsen 13, wobei in Fig. 3 eine dieser Führungshülsen 13 dargestellt ist.

Die Kopfstütze 12 umfasst ein Kopfanlageteil 14 sowie zwei Tragstangen 15. An dem Kopfanlageteil 14 ist eine Kopfanlagefläche 16 zur Anlage des Kopfes eines Sitzinsassen ausgebildet.

Wie in Fig. 2 zu erkennen ist, ist an der rechten Tragstange 15 eine Mehrzahl von Riegelstrukturen 19 ausgebildet, die eine Matrix 18 mehrerer Riegelstrukturen 19 bilden und Teil einer Verriegelungsvorrichtung 17 sind. Die Riegelstrukturen 19 dienen der lösbaren Verriegelung der Kopfstütze 10 in unterschiedlichen Höhenpositionen.

Die Verriegelungsvorrichtung 17 ist zwischen einer Riegelposition und einer Löseposition bewegbar. Nach dem Verstellen der Verriegelungsvorrichtung 17 in die Löseposition, können die Tragstangen 15 und damit die gesamte Kopfstütze 12 relativ zu der Haltestruktur 13 in die Richtungen z1 und z2 bewegt werden.

Sobald die Verriegelungsvorrichtung 17 sich wieder in einer Riegelposition befindet, kann ein Riegel (in Fig. 2 nicht erkennbar) der Haltestruktur 13 in eine der Riegelstrukturen 19 einrasten. Im vorliegenden Ausführungsbeispiel, sind die Riegelstrukturen 19 derart geformt, dass aufgrund des Zusammenwirkens des Riegels mit der Riegelstruktur 19 eine Bewegung in Richtung z2 verhindert wird, während eine Bewegung in Richtung z1 auch in der Riegelposition in Grenzen möglich ist. Alternativ könnte die Riegelstruktur 19 aber auch derart geformt sein, dass in der Riegelposition eine Bewegung der Tragstange 15 relativ zu der Führungsstruktur in beide Richtungen z1 und z2 verhindert wird.

Zur Verhinderung einer ungewollten Bewegung der Tragstangen 15 in Richtung z1, derart, dass sich die Tragstangen 15 aus der Haltestruktur 13 lösen können, ist eine Fangstruktur 20 an der Tragstange 15 ausgebildet. Die Fangstruktur 20 ist erfindungsgemäß derart ausgebildet, dass sich die Tragstangen 15 auch bei einer Verdrehung um eine Mittelachse m - solche Verdrehungen kommen bei einem Unfall nicht selten vor - nicht ungewollt aus dem Eingriff mit dem Riegel lösen können, worauf weiter unten noch eingegangen wird.

In Fig. 3 ist eine Haltevorrichtung 40 dargestellt, welche die Haltestruktur 13 sowie einen Riegelhalter 26 umfasst. Die Haltestruktur 13 ist z.B. hülsenartig mit einer Aussparung 29 ausgebildet und weist eine Einführöffnung 21 für die Tragstange 15 sowie eine radiale Öffnung 22 auf, durch welche sich ein außen an der Haltestruktur 13 bewegbar gelagerter Riegel 23 in Eingriff mit einer der Riegelstrukturen 19 oder der Fangstruktur 20 bewegen kann. Der Riegel 23 ist von einem Rückstellelement 24 in Eingriff mit einer der Riegelstrukturen 19 oder mit der Fangstruktur 20 belastet. Mittels einer Betätigung 25 kann ein Benutzer den Riegel 23 außer Eingriff mit der Tragstange 15 bewegen und damit die Verriegelungsvorrichtung 17 in die Löseposition verstellen.

Der Riegel 23 ist an einem Riegelhalter 26 befestigt. Er könnte alternativ auch einstückig mit diesem hergestellt sein. Der Riegelhalter 26 ist als mehrarmiger Hebel ausgebildet umfasst einen ersten Hebelarm 27, welcher mit der Betätigung 25 zusammenwirkt, und einen zweiten Hebelarm 28, an welchem der Riegel 23 gehalten ist. Der Riegelhalter 26 ist um die Schwenkachse a1 schwenkbar an der Haltestruktur 13 gehalten und wird von dem Rückstellelement 24 in Schwenkrichtung u1 belastet, wobei der Riegel 23 in Eingriff mit einer der Riegelstrukturen 19 oder mit der Fangaussparung 20 belastet wird.

Durch eine Kraft auf die Betätigung 25 kann die Verriegelungsvorrichtung 17 in die Löseposition verstellt werden, in welcher der Riegel 23 außer Eingriff mit den Riegelstrukturen 19 oder der Fangstruktur 20 ist. Es sei aber erwähnt, dass es für die Erfindung nachrangig ist, wie der Riegel 23 gehalten ist und wie er in Eingriff mit der Tragstange 15 bewegt wird.

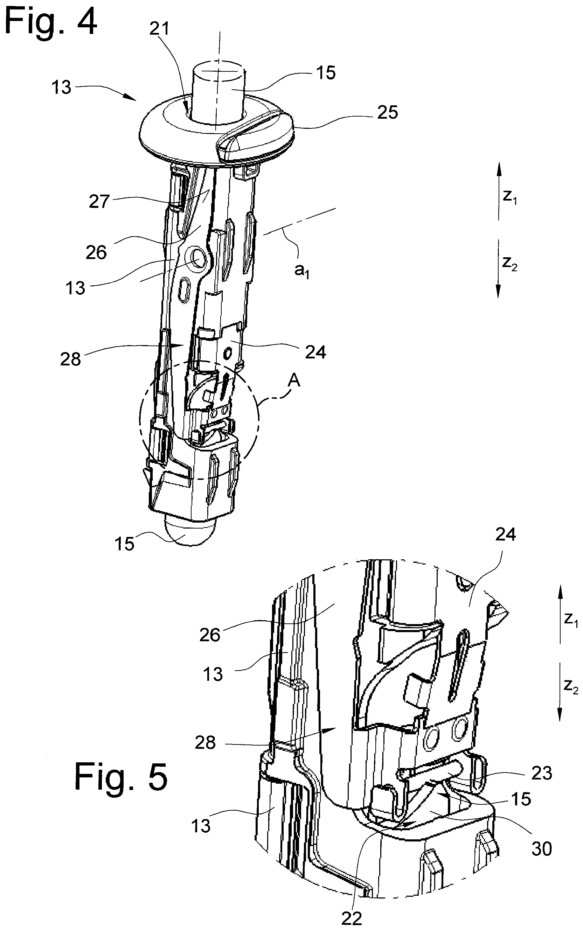

In den Fig. 4 und 5 ist die Tragstange 15 in der Aussparung 29 der Haltestruktur 13 aufgenommen. Die Verriegelungsvorrichtung 17 befindet sich in der Riegelposition. Der Riegel 23 ist in Eingriff mit der Fangstruktur 20. Insbesondere in der vergrößerten Ansicht gemäß Fig. 5 ist zu erkennen, dass eine Zunge 30 der Fangstruktur 20 der Tragstange 15 den Riegel 23 übergreift. Die Tragstange 15 kann aufgrund des Eingriffs des Riegels 23 mit der Fangstruktur 20 nicht weiter in Richtung z1 bewegt werden.

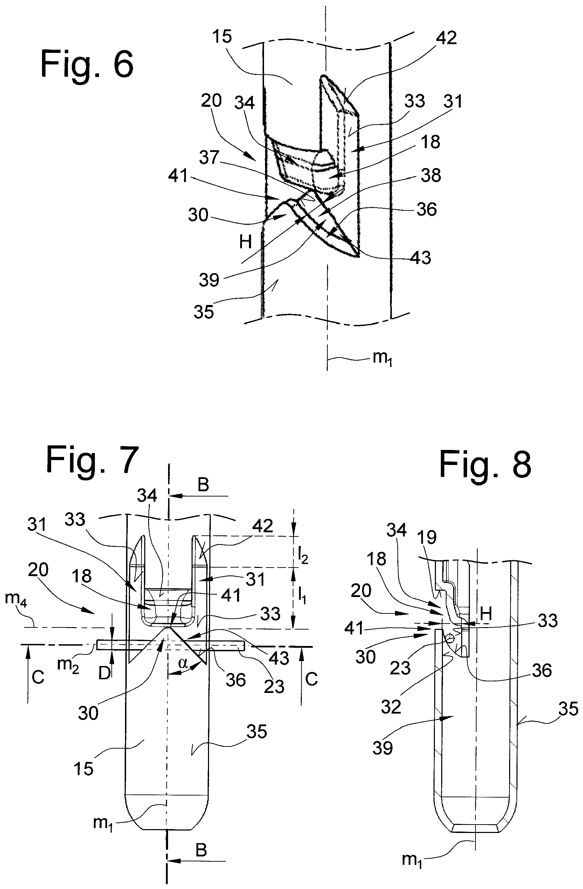

In Fig. 6 ist ein Bereich der Tragstange 15 mit der Fangstruktur 20 gezeigt. Die Fangstruktur 20 wurde erzeugt, indem mittels eines nicht dargestellten Presswerkzeugs die Außenfläche 35 der Tragstange 15 derart eingedrückt wird, dass eine Grundfläche 33 entsteht, die sich in einer z. B. etwa parallel zu der Mittelachse m1 angeordneten Ebene erstreckt. Dabei kann ein Bereich der Zunge 30 derart freigeprägt werden, dass ein Spalt 43 zwischen der Grundfläche 33 und der Zunge 30 entsteht. Alternativ können z. B. die beim Prägen der Grundfläche 33 aufgrund des Fließens des metallischen Materials der Tragstange 15 zwischen den danach unterschiedlichen Niveaus der Außenfläche 35 und der Grundfläche 33 gebildeten Wandflächen, später abgetragen werden, so dass der U-förmige Spalt zwischen der Zunge 30 und der Grundfläche 33 entsteht und an der Zunge 30 ein freier Randbereich 36 (siehe Fig. 6) sowie radial innerhalb der Zunge 30 eine Öffnung 38 mit einer Laibung 37 ausgebildet werden kann, über welche ein Innenraum 39 der Tragstange 15 radial zugänglich ist.

In Fig. 7 sind die Tragstange 15 und der Riegel 23 ohne die Haltestruktur 13 dargestellt. Eine Höhe H zwischen der Grundfläche 33 und einer Innenfläche 32 der Zunge 30 ist größer als der Durchmesser D des Riegels 23. Das hat zur Folge, dass der Riegel 23 sich zumindest mit einem Teilbereich seiner Querschnittsfläche zwischen die Grundfläche 33 und die Innenfläche 32 bewegen kann, wie in Fig. 7 zu sehen.

In den Figuren 7 und 8 ist erkennbar, dass sich der Riegel 23 tief in Richtung z2 in die Aussparung 29 bewegen kann, wobei der Riegel 23 radial innerhalb der Zunge 30 angeordnet ist (bezogen auf die Mittelachse m1).

In Fig. 7 ist ebenfalls erkennbar, dass die Randflächen 36 der Fangstruktur 20 mit der Mittelachse m1 einen Winkel α bilden, der etwa zwischen 30° und 65°, z.B. zwischen 30° und 60°, insbesondere zwischen 40° und 50° und insbesondere zwischen 60° und 65° betragen kann. Wie z.B. in Fig. 8 erkennbar hat das zur Folge, dass sich die Randflächen 36 bezüglich eines freien Endbereichs 41 der Zunge 30 in Richtung z2 erstrecken und der Riegel 23 sich auf diese Weise relativ weit unter die Fangstruktur 20 bewegen kann. Die Grundfläche 33 ist z.B. in dem Bereich der frei geschnittenen Zunge 30 komplementär geformt.

Bezüglich einer imaginären Achse m4, die rechtwinklig zu der Mittelachse m1 verläuft, liegt der Fangstruktur 20 eine Hangstruktur 34 gegenüber, welche sich zwischen der Außenfläche 35 und der Grundfläche 33 erstreckt. Die Hangstruktur 18 erstreckt sich über einen Längsbereich I der Tragstange 15 parallel zu einer Mittelachse m1. Die Hangstruktur 34 fällt von dem Niveau der Außenfläche 35 der Tragstange 15 über einen Längsbereich I1 der Mittelachse m1 allmählich auf das Niveau der Grundfläche 33 ab. Sie verhindert ein Reißen des Materials während des Prozesses des Eindrückens mittels eines Pressstempels an ungewollter Stelle. Außerdem wird der Riegel 23 von der Hangstruktur 34 in Eingriff mit der Fangstruktur geführt.

In dem Längsbereich I1 der Hangstruktur 18 und darüber hinaus in einem zusätzlichen Längsbereich I2 erstreckt sich die Grundfläche 33 beidseitig der Hangstruktur 18 parallel zu der Mittelachse m1. Mit einer Schrägfläche 42 steigt das Niveau der Grundfläche 33 parallel zu der Mittelachse m1 auf das Niveau der Außenfläche 35 an. Aufgrund dieser Seitenbereiche 31 der Grundfläche 33 ist die Riegelfläche 19 schmaler ausgebildet. Das verhindert die Gefahr einer ungewollten Entriegelung bei einer Verdrehung der Tragstange 15 um die Längsmittelachse m1.

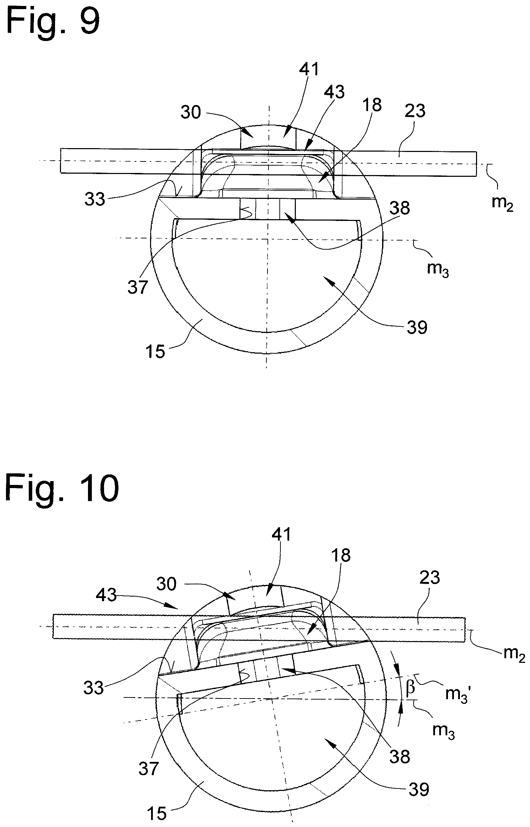

In Fig. 9 ist ein Querschnitt durch die Tragstange 15 und die Haltestruktur 13 gezeigt, wobei durch den Riegel 23 geschnitten wurde. In Fig. 9 ist die Tragstange 15 relativ zu der Haltestruktur 13 in ihrer SollPosition angeordnet, in welcher sich eine Mittelachse m2 des Riegels 23 etwa parallel zu der Grundfläche 33 und zu einer Achse m3 erstreckt, die ebenfalls parallel zu der Achse m2 verläuft. In Fig. 9 ist auch die Öffnung 38 mit der Laibung 37 zu erkennen, die sich aufgrund der freigeschnittenen Fangstruktur 20 ergibt.

In Fig. 10 ist die Tragstange 15 z.B. aufgrund eines Fahrzeugunfalls um einen Winkel β zwischen der Achse m3 und einer Achse m3' verdreht. Es ist erkennbar, dass der Riegel 23 dennoch von der Fangstruktur 20 übergriffen wird, so dass die Tragstange 15 an einer radialen Bewegung in Richtung r gehindert ist. Die Tragstange 15 kann daher nicht in Richtung z1 aus dem Eingriff mit der Haltestruktur 13 heraus bewegt werden.

## Patentansprüche

1. Tragstange (15) für eine Kopfstütze eines Fahrzeugsitzes, welche als Rohr ausgebildet ist, mit wenigstens einer Struktur, die Teil einer Verriegelungsvorrichtung (17) ist und zum Zusammenwirken mit einem einer Haltestruktur (13) zugeordneten Riegel (23) der Verriegelungsvorrichtung (17) bestimmt ist, wobei die Struktur (19, 20) eine Grundfläche (33) aufweist, welche eine Bewegung des Riegels (23) radial zu einer Mittelachse (m) der Tragstange (15) verhindert und eine Riegelfläche umfasst, mit welcher im Zusammenwirken mit dem Riegel (23) eine Bewegung der Tragstange (15) in wenigstens eine erste Richtung (z1) verhinderbar ist, **dadurch gekennzeichnet, dass** wenigstens eine Riegelstruktur als Fangstruktur (20) mit einer freigeschnittenen Zunge (30) versehen ist, wobei eine radial zu einer Mittelachse (m1) der Tragstange (15) gewandte Innenfläche (32) der Zunge (30) an einem freien Ende (40) mit einer Höhe (H) von der Grundfläche (33) beabstandet ist, so dass der Riegel (23) zumindest mit einem Teilbereich radial unter einen Bereich der Innenfläche (32) der Zunge (30) bewegbar ist.

2. Tragstange (15) nach Anspruch 1, **dadurch gekennzeichnet, dass** sich die Zunge (30) parallel zu der Mittelachse (m1) erstreckt.

3. Tragstange (15) nach einem der vorangehenden Ansprüche, **dadurch gekennzeichnet, dass** die Riegelfläche von Randflächen (36) gebildet ist, die sich zwischen einem freien Endbereich (41) der freigeschnittenen Zunge (30) und der Grundfläche (33) erstrecken.

4. Tragstange (15) nach einem der vorangehenden Ansprüche, **dadurch gekennzeichnet, dass** die Zunge (30) zwei aufeinander zulaufende Randflächen (36) aufweist, die sich an dem freien Ende (41) treffen.

5. Tragstange (15) nach einem der vorangehenden Ansprüche, **dadurch gekennzeichnet, dass** die Randflächen (36) mit der Mittelachse (m1) einen Winkel (a) bilden.

6. Tragstange (15) nach einem der vorangehenden Ansprüche, **dadurch gekennzeichnet, dass** der Fangstruktur (20) eine Riegelstruktur (19) gegenüberliegt, die derart ausgebildet ist, dass sie im Zusammenwirken mit dem Riegel (23) eine Bewegung der Tragstange (15) in eine Richtung (z2) verhindern kann.

7. Tragstange (15) nach einem der vorangehenden Ansprüche, **dadurch gekennzeichnet, dass** der Fangstruktur (20) in Längsrichtung der Mittelachse (m1) eine Hangstruktur (34) gegenüberliegt, die von einer Außenfläche (35) der Tragstange (15) in Richtung (z2) über einen Längsbereich (I1) auf die Grundfläche (33) abfällt.

8. Tragstange (15) nach einem der vorangehenden Ansprüche, **dadurch gekennzeichnet, dass** sich die Grundfläche (33) seitlich der Hangstruktur (34) zumindest über den Längsbereich (I1) der Mittelachse (m1) erstreckt.

9. Tragstange (15) nach einem der vorangehenden Ansprüche, **dadurch gekennzeichnet, dass** die Tragstange (15) als Einzeltragstange oder als freier Endbereich eines Tragstangenbügels ausgebildet ist.

10. Haltevorrichtung (40) für ein Kopfanlageteil (14) umfassend eine Haltestruktur (13), welche eine Führung für eine Tragstange (15) oder ein freies Ende eines Tragstangenbügels bildet und mit einem Riegel (23) einer Verriegelungsvorrichtung (17) welcher an der Haltestruktur (13) derart bewegbar gehalten ist, dass er in Eingriff und außer Eingriff mit einer Aussparung (19, 20) der Tragstange (15) bewegbar ist, **dadurch gekennzeichnet, dass** die Tragstange (15) nach einem der Ansprüche 1-7 ausgebildet ist.

11. Haltevorrichtung (40), **dadurch gekennzeichnet, dass** der Riegel im Querschnitt im Wesentlichen kreisförmig ausgebildet ist.

12. Verfahren zur Herstellung einer Tragstange (15) mit einer Fangstruktur (20) gemäß einem der Ansprüche 1 bis 7, wobei ein Bereich der Außenfläche (35) der Tragstange (15) mittels eines Stempels etwa rechtwinklig zu einer Mittelachse (m1) der Tragstange (15) eingedrückt wird, **dadurch gekennzeichnet, dass** eine aufgrund des Eindrückens entstehende Flankenfläche (34) derart abgetragen wird, dass eine sich in eine Richtung parallel zu der Mittelachse (m1) erstreckende freie Zunge (30) mit einem freien Ende (41) gebildet ist.

13. Verfahren nach Anspruch , **dadurch gekennzeichnet, dass** vor dem Eindrücken der Aussparung eine Matrize in einen Innenraum (39) der Tragstange (15) eingeführt wird, welche ein Gegenlager für das Eindrückwerkzeug bildet.
